Europäisches Patentamt

(19) **European Patent Office** (11) Publication number: **0 022 681**
**A1**

Office européen des brevets

(12) **EUROPEAN PATENT APPLICATION**

(21) Application number: **80302391.0** (51) Int. Cl.³: **F 16 B 4/00**

(22) Date of filing: **16.07.80**

(30) Priority: **16.07.79 US 57588**

(71) Applicant: **C.L. FROST & SON, INC., 2020 Bristol Avenue North West, Grand Rapids Michigan (US)**

(43) Date of publication of application: **21.01.81 Bulletin 81/3**

(72) Inventor: **Weis, Siegfried K., 3589 - 68TH Street S.W., Byron Center Michigan (US)**

(84) Designated Contracting States: **BE CH DE FR GB IT LI NL SE**

(74) Representative: **Robinson, Anthony John Metcalf, Kilburn & Strode 30 John Street, London, WC1N 2DD (GB)**

㊹ **Fastening apparatus and method for assembling same.**

㊐ The fastener includes a shaft (32) having a groove (52). A second member, such as a collar (38), is received coaxially over and surrounding the shaft area including the groove. A deformable retainer (64), received between the collar and shaft, secures the collar on the shaft and is bent inwardly into the groove by an internal shoulder (62) on the collar when inserted between the collar and shaft. The deformable retainer may be integrally and detachably formed with the collar. The method includes positioning the second member or collar, and inserting and deforming the retainer between the shaft and collar. The apparatus may be used to secure parts of bearing assemblies and retain bearing shields on such assemblies, in chain pin assemblies to form chains for conveyors or other applications, and for general fastening purposes.

An eccentrically positioned interlock for preventing rotation between the inner race parts (38) of a conveyor wheel assembly (25) and a support member (15) supporting the wheel assembly is also described.

# FASTENING APPARATUS AND METHOD FOR ASSEMBLING SAME

This invention relates to a fastening assembly which is especially useful in bearing assemblies and chain pins for conveyor chains and other chains, as well as in other more general applications.  The invention also relates to a method for assembling such a fastener.  An interlock between a conveyor wheel assembly and a support member is also disclosed.

Prior bearing assemblies, and especially those used as trolley wheels in overhead conveyors and other conveyor applications, have utilized conventional fastening systems or methods.  In certain prior trolley bearing assemblies including multiple piece inner races, various inner race parts, and various shields used to prevent dirt from entering the bearing assemblies during operation, have only been properly retained together when completely assembled on site with a trolley bracket in an actual conveyor.  This resulted in numerous problems including loss of various parts or sub-assemblies during shipment.  In addition, prior methods required time-consuming, tedious assembly steps on site in plants.  In addition, prior fastening methods and structures generally required a significant amount of space in bearing assemblies, thereby cutting down on the available area for ensuring secure fastening if space was limited.  In addition, prior methods made it difficult to reduce rotation of inner race parts in use thereby shortening their life due to increased wear.

In another application, prior known fastening structures and methods cause difficulties in chain assemblies especially for conveyor applications. Such chains use chain pins to secure the ends of various links together. Such pins are usually hardened for wear resistance. However, the use of such hardened pins prevents the ends of such pins from being formed or headed to retain the links on the pins. Consequently, it has been necessary in the past to utilize separate fasteners such as snap rings, cotter keys and the like to retain the links in place. Such separate fasteners were often much less secure than hoped for, could release or be broken easily causing complete conveyor shut-down, provided numerous surfaces and recesses for collection of dirt or food particles making their use in food processing applications less than desirable, or requiring greater efforts at sanitation. Assembly of such chains with separate fasteners is very time consuming, since it is difficult properly to locate certain types of such separate fasteners along the pins exactly for proper link spacing. In fact, "in-line" assembly of chain links when oriented in a straight line or automated assembly of chain links with certain prior fasteners was all but impossible.

Problems have also been experienced in preventing rotation between the inner race of a conveyor wheel assembly and a support member and in removing such a wheel assembly from a conveyor without disassembling other parts of the conveyor.

The present fastening structure was devised as a solution to the above-described problems in bearing and chain assemblies, especially in conveyor applications. Moreover, as will be understood, the present invention has many other applications as well.

Accordingly, the present invention provides a fastening apparatus and method for assembling same which provides a permanent fastener useful in many and varied applications. According to one aspect of the present invention a fastening apparatus comprises a shaft with a groove in the shaft adjacent a predetermined portion of the shaft, the groove having a side surface extending inwardly at an angle to the axis of the shaft and away from the predetermined portion; a second member adapted to be received coaxially over and surrounding the shaft, the second member including a through aperture for receiving the shaft and an interior surface larger than the shaft, and at least a portion of the interior surface of the second member being adapted for alignment with and in opposition to the groove, the portion extending at an angle to the axis of the shaft and away from the predetermined portion of the shaft; the first and second members defining a retainer-receiving space therebetween; and a deformable retainer adapted to be received from adjacent the predetermined portion of the shaft in the retainer-receiving space between the first and second members and adapted to be deformed by the said interior surface of the second member and into the groove when inserted between the members for retaining the first and second members together.

The fastening apparatus may be incorporated in a bearing assembly to secure inner race parts on a support at the centre of the assembly. In a preferred embodiment, the deformable retainer is a flange on a bearing shield designed to both secure the inner race parts and hold the shield in place covering the space between the inner and outer races.

The fastening apparatus may also be used in chain pin assemblies for securing a collar over the end of an elongated pin which secures link ends of the chain together. In a preferred embodiment, the deformable retainer is an annular band or ring which is formed integrally in one piece with the collar by means of a frangible connection. The connection is broken during insertion of the retainer between the collar and pin to hold the links together.

According to a second aspect of the present invention, a method for assembling a fastening assembly comprises providing a shaft and a groove or recess therein adjacent a predetermined area of the shaft; placing a second member around and over the groove in the shaft, the second member having an interior surface larger than the shaft which defines a space between the shaft and second member; inserting a deformable retainer means into the space between the shaft and second member from adjacent the predetermined area and deforming the retainer inwardly toward the shaft into said groove or recess during such insertion with a portion of the interior surface of the second member which extends toward the shaft for retaining the second member on the shaft and preventing its withdrawal over the predetermined area of the shaft.

The invention also includes, according to a third

5.

aspect, a wheel assembly for a conveyor system including outer race means for providing an outer raceway, inner race means for providing an inner raceway, bearing means between the inner and outer race means for rotatably supporting one race means with respect to the other, a support member having interengaging locking means extending between the support member and the inner race means, and a stud engaging the support member and the inner race means, the stud having a central axis coaxial with the central axis of the inner race means, characterised in that the interengaging locking means includes a projection on at least one of the support member and the inner race means and a recess on the other of the support member and inner race means, the recess corresponding in shape to and receiving the projection, the projection and recess being positioned eccentrically with respect to the common central axis of the stud and inner race means whereby rotation between the support member and inner race means is prevented.

Numerous advantages result from the fastening apparatus and method. In general terms, the device and method provide a permanent fastener which is more secure and positive than prior known fasteners. In bearing assemblies, the invention helps retain parts together for shipment as well as during operation, maintains race parts against rotation, may be used to facilitate retention of bearing shields on such assemblies, and improves assembly speed of the bearing assembly. In chains, the invention allows the use of harder, more wear resistant pins because of the elimination of any need to deform the pin itself. In addition, shorter pins can be used which are less expensive. The fastener is also more secure than prior known separate fasteners such as snap rings, and eliminates the handling of a separate part during assembly when the retainer is formed in one piece with the collar. In addition, the invention allows easy and faster automation of chain assembly by allowing "in-line" assembly to take place. The collar is automatically located for proper link spacing on the pins using the invention. Further, the structure of the invention is cleaner and better suited for use in food processing and other sanitary conditions since it reduces the number of grooves or exposed pockets available to collect dirt or food particles.

The interengaging eccentrically located projection and recess on the conveyor wheel assembly and support member facilitate longer life for the conveyor wheel assembly by preventing rotation of the inner race on its support member. In the preferred embodiment, since the inner race acts as a nut the eccentrically located projection and recess hold the inner race during tightening and loosening of the stud or bolt without any tools. Also the eccentrically positioned interlock allows removal of the entire wheel assembly from the conveyor support track without disassembly of other parts of the conveyor system.

The invention may be carried into practice in various ways but one trolley wheel, one pallet wheel and one conveyor wheel assembly embodying the invention will now be described by way of example with reference to the accompanying drawings, in which:

Figure 1 is an end view of a trolley wheel and bracket assembly, shown partially in section, illustrating fastening apparatus in accordance with the present invention used to secure inner race parts and a bearing shield in the assembly;

Figure 2 is an enlarged, fragmentary, sectional view of the inner race parts of the bearing assembly of Figure 1 illustrating the deformable bearing shield flange holding them together and the shield on the assembly;

Figure 3 is a side elevation of one of the trolley wheels separate from the trolley bracket and illustrating the side of the wheel adapted to be secured to the upper end of the trolley bracket;

Figure 4 is a fragmentary side elevation of the upper end of the trolley bracket adapted to be secured to the side of the trolley wheel as shown in Figure 3;

Figure 5 is a sectional elevation of a pallet wheel assembly incorporating fastening apparatus in accordance with the present invention;

Figure 6 is a side elevation of the bearing assembly shown in Figure 5;

Figure 7 is a perspective view of a conveyor chain assembly incorporating in its chain pins fastening apparatus in accordance with the present invention;

Figure 8 is a sectional plan view of the conveyor chain assembly shown in Figure 7;

Figure 9 is a side elevation of one of the chain pins used in the assembly shown in Figures 7 and 8;

Figure 10 is an end elevation of the chain pin shown in Figure 9;

Figure 11 is a sectional side elevation of one form of an integral collar with retaining ring prior to assembly with a chain pin of the type shown in Figure 9;

Figure 12 is a side elevation of the collar and retaining ring of Figure 11;

Figure 13 is a modified form of collar and retaining rings not integrally formed with one another;

Figure 14 is a fragmentary illustration of a chain pin collar and retaining ring of Figures 9 to 13 shown after a portion of the assembly procedure on a chain pin has been completed;  and

Figure 15 is a fragmentary side elevation of an assembled chain pin and collar shown partially in section.

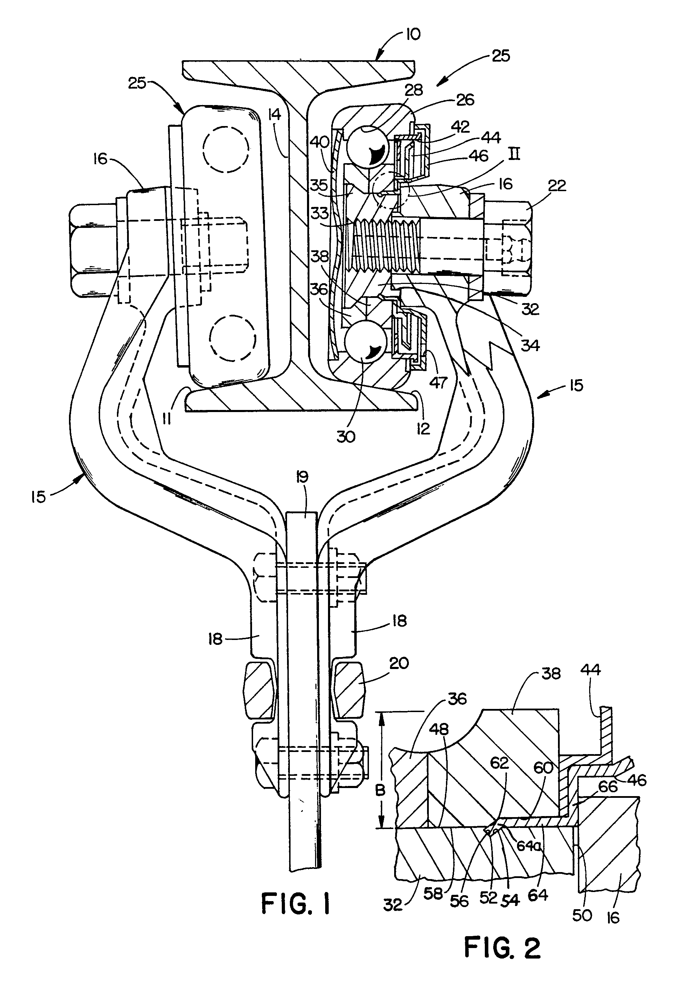

Referring now to the drawings in greater detail, Figures 1 to 4 show a fastening apparatus utilized in a trolley wheel bearing assembly in an overhead conveyor system.  The conveyor includes a conventional I-beam track 10 having generally horizontally extending lower flanges whose slightly angled, upper surfaces 11, 12 support trolley wheel bearing assemblies 25 on either side of the central flange 14.  Each of the trolley wheel bearing assemblies 25 is secured to the upper end 16 of a downwardly extending trolley bracket or support member 15. The trolley brackets 15 include lower end portions 18 which are bolted back-to-back with one another with a spacer 19 therebetween and are received within the central space of a chain link 20 forming a portion of the conveyor chain supported by the bearing assemblies.

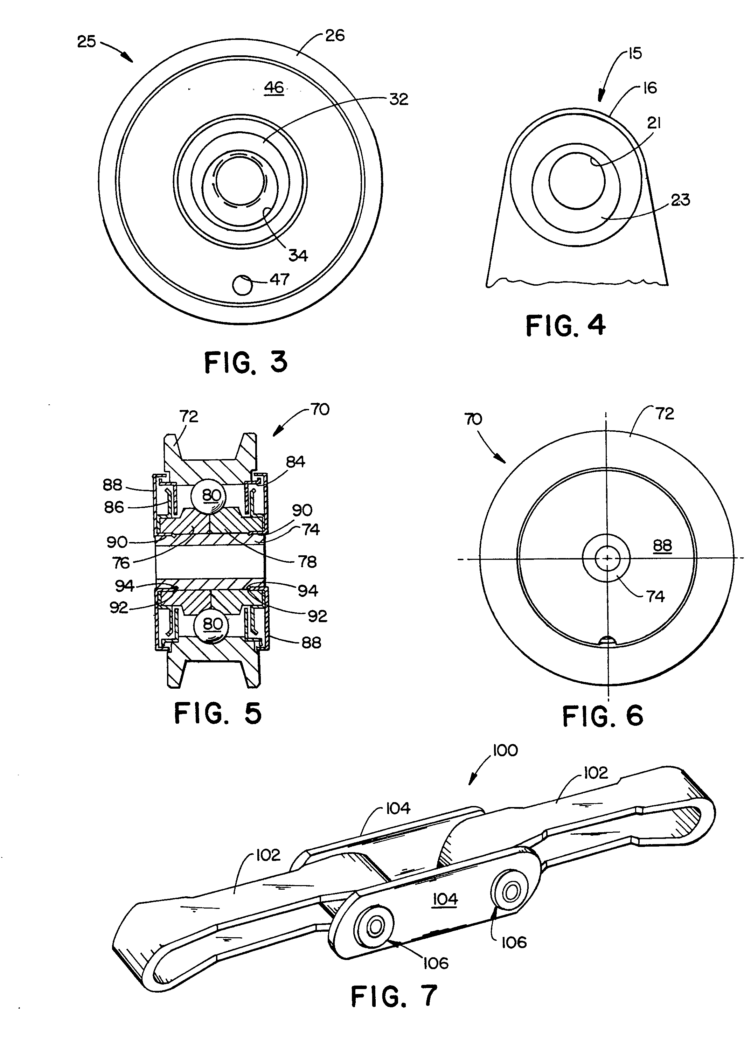

As is best seen in Figure 4, the upper end or head 16 of the trolley bracket 15 includes a central, circular aperture 21 therethrough which receives a bolt 22 for securing the bracket to one of the trolley wheel bearing assemblies 25, the inner race hub 32 of the assembly being threaded to receive the bolt. The inwardly facing surface of the upper end 16 includes a circular projection or nose 23 located eccentrically with respect to the common axis of the bolt 22 and the inner race hub 32. The projection 23 mates with a correspondingly shaped, eccentrically located recess 34 in the side surface of the support hub 32 of the wheel assembly 25 to prevent rotation of the support hub 32 when secured to the bracket. Such interlock of the projection and recess holds the inner race against rotation without any other tools while the bolt or stud 22 is being tightened or loosened. The projection 23 need extend only a small distance into the hub 32 to prevent rotation because of its eccentric position thereby allowing removal of the wheel assembly 25 from the bracket 15 without disassembling the two brackets 15 from the chain 20. Such removal is accomplished by unscrewing the bolt 22 and pushing the wheel assembly 25 toward the central flange 14 of the track 10 and then laterally to one side or the other of the head 16. Preferably, the projection 23 extends into the recess 34 a distance less than the distance between the innermost surface of the wheel assembly 25 and the flange 14 of the track 10. The bolt 22 may include a grease passageway centrally therein and a recessed, protected grease nipple for lubrication of the interior of the trolley wheel when secured as shown in Figure 1.

As is best seen in Figures 1 and 3, each trolley wheel assembly 25 includes an annular outer race part 26 including an annular outer raceway 28 on its inner peripheral surface. The inner race assembly of trolley wheel assembly 25 is formed in three parts and spaced radially inwardly from the outer race to provide an antifriction ball bearing receiving area for receiving ball bearings 30. The inner race assembly includes a central support hub 32 including a threaded central aperture 33, eccentrically located circular recess 34 in one end, and a pair of mating, annular inner race parts 36, 38 having central apertures telescoped over the hub 32. Hub 32 also has an annular ridge 35 for retaining the race parts 36, 38 at one end. The recess 34 is preferably formed with a cutting tool or the like.

Inner race parts 36, 38 each include a smooth, curved surface portion forming a part of the inner raceway when fitted with the other inner race part to support the ball bearing 30. One side of the trolley wheel assembly 25 is closed and shielded by a continuous, closed sealing disc 40 pressed into a recess in the outer race. The opposite side includes a multi-part, labyrinth seal assembly including an inner seal 42 secured to the outer race 26., an intermediate seal 44, and an outer shield 46 which will be more fully described hereinafter. The seals 40, 42, 46 cover the area between the inner and outer race parts to prevent the entry of dirt and other contaminates and to retain lubricants within the assembly. Since the outer shield 46 remains stationary as described below, a drain hole 47 is provided in its lower sector (Figure 3) to drain water or other liquids which might collect within the assembly.

Referring now to Figure 2, the fastening apparatus for retaining the inner race parts together as an assembly and the shields 44, 46 on the assembly is illustrated. The hub support 32 includes an exterior, annular peripheral surface 48 which is parallel to the axis of the hub and assembly 25. Adjacent the free end 50 of the hub 32 is a generally V-shaped groove 52. The side surface 54 of the groove 52 closest to the free end 50 extends at an angle away from the free end 50 preferably within the range of 30-45° to the surface 48. The other side 56 of the groove 52 extends at a right angle from the end of the side 54 back to the surface 48.

Aligned with and opposing the exterior peripheral surface 48 is the outermost inner race part 38 having an inner peripheral annular surface 58 designed to match and telescope over the surface 48 as shown in Figures 1 and 2. The outermost portion of the inner peripheral surface 58 is relieved at 60 to form an annular surface larger in diameter than the surface 48 and parallel to the axis of the hub 32. This provides a retainer-receiving space between the surfaces 48 and 60. A shoulder 62 extends inwardly toward the surface 48 between the surfaces 60 and 58 and also away from the free end 50 of the hub 32 and generally parallel to the side 54 of the groove 52.

The outermost shield 46 includes an inwardly extending, closed, annular band having a length sufficient to fill the retainer receiving space and groove 52 when inserted between the hub 32 and the inner race part 38 as shown in Figure 2. The edge thickness of the flange 64 corresponds to the width of the space between the hub 32 and the inner race part 38. Preferably, the shield 46 is formed from metal which is sufficiently soft, bendable and ductile to enable the outermost free end portion 64a of the flange 64 to deflect and bend inwardly when it engages the shoulder 62 of the inner race part 38 as the flange 64 is inserted within the retainer receiving space thereby to fill the groove 52. After such insertion, the seal 46 will be seen to clamp the innermost radial portion of the seal 44 between the radially extending portion 66 and the outer side of the inner race part 38. The flange 64 also retains the inner race parts 36, 38 together on the hub 32, prevents their axial removal, and helps reduce rotation of these parts on the hub support. This provides longer life for the inner race parts. This general construction also allows a greater thread area to be included in the hub support aperture 33 than in previous assemblies. When assembled with the bracket 15, the head 16 helps clamp the shields 44, 46 in place and retain the inner race parts 36, 38 together and on the hub 32.

As shown in Figures 5 and 6, the fastening apparatus and method of the present invention may also be used in other bearing assemblies such as a pallet wheel 70. The basic arrangement of the wheel 70 is similar to that of the trolley wheel assembly 25 except that a fastening apparatus embodying the present invention is used on both sides of the wheel. The wheel 70 includes an outer race part 72, a cylindrical inner support hub 74, a pair of inner race parts 76, 78 mating and telescoped over the hub 74, and a plurality of antifriction ball bearings 80 between the inner and outer race parts. Shield assemblies on either side of the wheel 70 include inner shields 84, intermediate shields 86, and outer shields 88. The outer shields 88 include a deformable, inwardly extending, closed annular band or flange 90 thereon providing the deformable retainer for holding the race parts together and preventing rotation of those parts with respect to the hub 74. The inner race parts 76, 78 are relieved adjacent their outer ends and include angled, inwardly extending shoulders 92 for deforming the ends of the flanges 90 toward and into grooves 94 formed adjacent each free end of the hub 74 and aligned with the shoulders 9. Hence, flanges 90 retain the shields 88 in position on either opposite side of the wheel 70, secure the inner race parts 76, 78 in position on the hub 74, and prevent the rotation of those parts with respect to the hub in the same manner as described above in connection with the trolley wheel assemblies 25.

14.

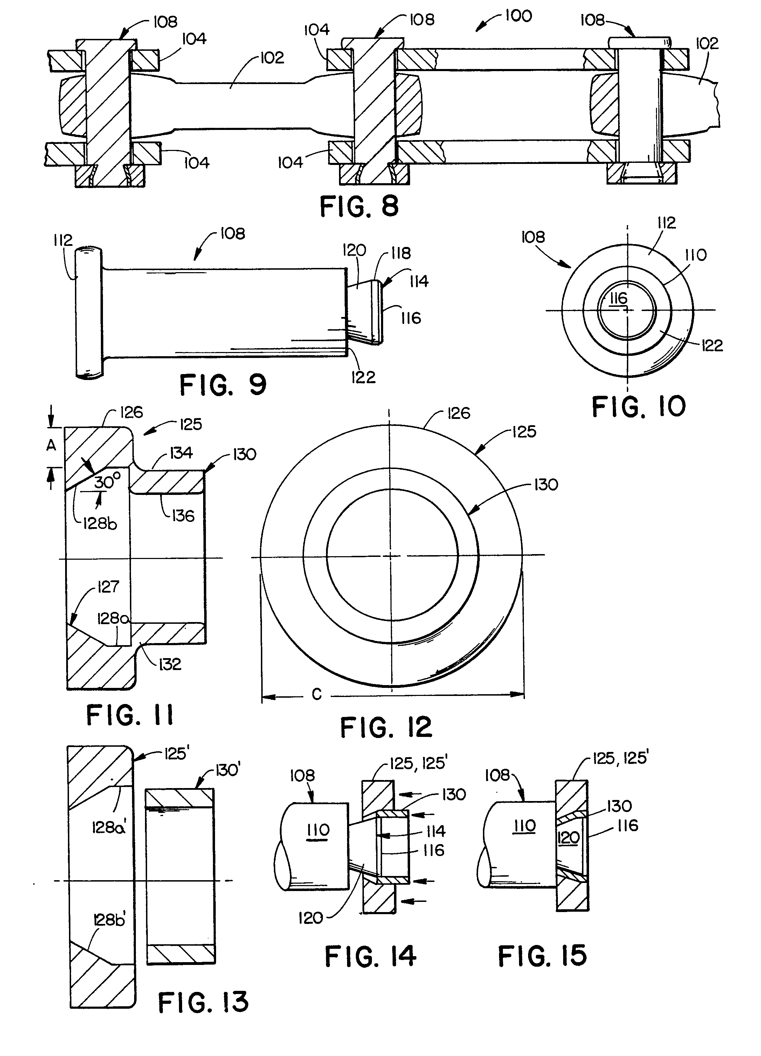

Yet another application of the fastening apparatus and method of the present invention is in chain pins retaining chain link parts together, especially in conveyor chains such as that shown in Figures 7 and 8. A typical conveyor chain 100, with which the fastening apparatus and method is useful, includes centre links 102 alternating with side links 104. One end of one centre link and one end of each of two side links are secured together by a generally rectilinear chain pin assembly 106 including the fastening apparatus and method described herein.

As is best seen in Figures 8 to 10, each chain pin 108 includes a right circular cylindrical body or shaft 110, and a flattened, circular, enlarged head 112 at one end. The head 112 is larger than the diameter of the shaft 110 to retain the links on that end. The end opposite the head 112 on the pin 108 includes a short shaft or projection 114 extending outwardly from the end of the body 110. The projection 114 includes a free end 116, an annular, cylindrical. exterior peripheral surface 118 extending parallel to the axis of the pin 108, and an angled conical surface 120 extending between the surface 118 and the end surface 122 of the shaft 110 which extends at right angles to the axis of the pin 108, the conical surface thus forming a groove in the shaft. Preferably, the conical surface 120 extends at an angle of slightly less than $30^{\circ}$ to the surface 118.

As seen in Figures 11 and 12, one form 125 of a collar provides a mating fastening part received over the projection 114. The collar 125 includes an outer periphery 126 and an inner peripheral surface 127 in two portions, namely, 128a and 128b, forming a through aperture. The inner peripheral portion 128a is a right cylindrical annular surface longer than the surface 118 and extending parallel to the axis of the collar and to the outer periphery 126. The inner surface 128b is a conical surface extending inwardly toward the axis of the collar preferably at $30^{o}$ to the inner surface 128a. In the preferred embodiment, the collar 125 expands slightly during assembly so that the surface 128b will be approximately parallel to the surface 120 after assembly. A retainer band 130 will fill any space which is produced by slight convergence of the surfaces 128b and 120.

The deformable retainer band 130, used to secure the collar 125 on the pin 108, is formed integrally, coaxially, and in one piece with the collar as shown in Figures 11 and 12. Preferably, the collar 125 plus retainer 130 is made from metal which can be cold-formed, such as cold-rolled steel. The retainer 130 is connected to the corner of the through aperture on the side of the collar 125 opposite the shoulder 128b such that the retainer is coaxial with and aligned with the through aperture and interior cylindrical annular surface 128a. Such connection is formed by an annular, frangible neck 132 designed to break when the retainer 130 is struck with a hammer or other insertion tool, and forced inwardly into the through aperture. The retainer 130 is a right cylindrical, annular closed band having cylindrical annular inner and outer peripheral surfaces 134, 136 which are parallel to one another and the axis of the collar 125. When attached via the frangible neck 132, the outer surface 134 is slightly radially inward of the surface 128a so there will be no obstruction to insertion of the band.

Figure 13 illustrates a modified version of the collar 125' and the deformable retainer 130'. In this embodiment, the retainer 130' is formed separately from the collar 125' and has an exterior annular surface designed to be slightly smaller than the diameter of the interior surface 128a' just as in the embodiment shown in Figures 11 and 12. Hence, the only difference between the embodiment shown in Figure 13 and that of Figures 11 and 12 is the separate formation of the deformable retainer 130'. However, since it is made separately, the retainer band 130' can be made from a soft metal for proper deformation while collar 125' is made from harder, more wear-resistant metal.

The preferred assembly method of the collar 125 or 125' on the chain pin 108 may be understood from Figures 8, 14 and 15. The collar 125 or 125' is telescoped over the projection 114 until it abuts the end surface 122 of the shaft 110. Abutment of the collar with the surface 122 automatically aligns the conical surfaces 128b and 120. Thereafter, the deformable retainer 130 is struck to break the connection 132, and pushed or forced into the retainer-receiving space between the collar 125 or 125' and the projection 114. The retainer slides along and between the surfaces 118 and 128a until the inner end edge of the retainer band 130 engages the slanted or angled conical surface 128b. The conical surface of the collar forces the bendable retainer inwardly toward the axis of the pin and along the conical surface 120 till the movable retainer reaches the end surface 122 and completely fills the retainer-receiving space (Figure 15). The length of the retainer 130 is sufficient such that, after the above insertion, its exposed end will be substantially flush with the end surface 116 and the side surface of the collar 125 or 125' as shown in Figure 15. Accordingly, the deformable retainer prevents withdrawal of the collar 125 or 125' outwardly over the free end 116 of pin 108 and prevents rotation of the collar around the projection 114.

The same method is used for assembly of the shields 46 and 88 on the wheels 25, 70 except that the retainer is not broken from the shield. Further, the inner race parts 38, 78 are automatically aligned over the grooves 52, 94 by engagement with the parts 36, 76.

The above assembly method and fastening structure is also useful in assembling a chain such as that shown in Figure 8. In such a method, the pins 108 may be inserted from one side of three aligned, "in-line" links and inserted through the ends or end apertures of such links. Thereafter, the collars 125 or 125' may be placed over the projections 114 and located automatically on the surfaces 122 thereby automatically providing sufficient space for the link ends between the heads 112 and the collars 125 or 125'. Thereafter, the deformable retainer bands may be driven or forced into the retainer-receiving spaces to permanently affix the collars 125, 125' in place and prevent disassembly of the chain. Such "in-line" assembly of the conveyor chain is substantially faster than previous methods which have often required angular orientation of various link ends with resepct to one another for receipt of specially headed or other chain pins.

Alternatively, retaining bands 130 may be initially partially inserted within the through aperture of the collar 125, 125' as shown in Figure 14. This ensures that the collar will be properly aligned with the projection 114 because of the engagement of the interior peripheral surface 136 of the retainer 130 with the annular surface 118 of the projection 114. Such a method ensures proper radial location of the collar to form the deformable retainer receiving space. The deformable retainer and collar can be simultaneously driven or forced inwardly against the surface 122 to the position shown in Figure 15. With either method, automatic location of the collar against the end surface 122 is assured to guarantee proper alignment of the conical surfaces forming the retainer receiving space.

As will be apparent, the collar 125, 125', or in fact, the inner race parts 38, 76, 78 in bearing assemblies 25, 70 above, cannot be withdrawn or disassembled from their chain pins or support hubs without damaging the collar or inner race parts. Hence, the assembly is permanent and must be damaged for disassembly. The amount of force necessary to cause such disassembly depends upon the wall thickness of the collar or inner race intermediate its interior peripheral surface and its exterior peripheral surface (i.e., dimensions A and B in Figures 11 and 2). Preferably, the thickness A (Figure 11) or B (Figure 2) should be at least two to three times the thickness of the deformable retainer 130 to resist outward expansion of the collar or inner race parts and withdrawal or disassembly from the chain pin or bearing hub. In the case of the chain pin assembly shown in Figures 7 to 15, a force for disassembling the collar from the pin after assembly as described above is approximately 17,800 N in tension when the thickness of dimension A is approximately 3.05 to 3.18 mm and the thickness of the deformable retainer is approximately 1.57 mm with diameter C of Figure 12 being approximately 19.05 mm. A breakaway force sufficient to break the frangible connection 132 (Figure 11) is approximately 445 to 667 N when the neck 132 has a thickness of 0.05 to 0.08 mm. That breaking force depends on the thickness of the frangible connection.

The above apparatus and method will be seen to allow use of harder more wear resistant chain pins while also enabling use of collars and deformable retainers of softer metal for assembly in the above-described manner. In addition, chain pins of the described assembly are stronger and more reliable than those using the previously employed separate fastening devices for chain pins, will provide ease and quickness of "in-line" assembly of chain links, allow better control and smaller pin lengths, and provide fewer recesses for collecting dirt or food particles making the fastening assembly cleaner and better suited for use in food processing and other sanitary applications. Moreover, with the embodiment of the collar and retainer shown in Figures 11 and 12 when integrally formed, the method eliminates the handling and alignment of the separate retainer part to further speed assembly.

21.

CLAIMS

1. A fastening apparatus comprising: a shaft
(32, 74, 110) with a groove (52, 94, 120) in the
shaft adjacent a predetermined portion of the shaft,
the groove having a side surface extending inwardly
at an angle to the axis of the shaft and away from
the predetermined portion; a second member (38; 76,
78; 125) adapted to be received coaxially over and
surrounding the shaft, the second member including
a through aperture for receiving the shaft and an
interior surface (60, 128a, 128b) larger than the
shaft, and at least a portion of the interior surface
of the second member being adapted for alignment with
and in opposition to the groove, the portion (62, 92,
128b) extending at an angle to the axis of the shaft
and away from the predetermined portion of the shaft;
the first and second members defining a retainer-
receiving space therebetween; and a deformable
retainer (64, 90, 130) adapted to be received from
adjacent the predetermined portion of the shaft in the
retainer-receiving space between the first and second
members and adapted to be deformed by the said interior surface of the second member and into the
groove when inserted between the members for retaining
the first and second members together.

2. A fastening apparatus according to Claim 1
in which the shaft has a free end (50, 116) and a portion
(48, 118) of constant diameter leading from the free

22.

end to the groove, and the aperture in the second member has a portion of diameter greater than that of the said portion of the shaft leading to an inwardly sloping shoulder (62, 128b).

3.   A fastening apparatus according to Claim 2 wherein the shaft includes an upstanding surface (35, 122) for abutting the second member when the shoulder is aligned with the groove.

4.   A fastening apparatus according to Claim 3 wherein the side surface (120) of the groove extends from the first external peripheral surface to the upstanding surface (122).

5.   A fastening apparatus according to Claim 2, 3 or 4 wherein the said portion (60, 128a) on the second member is parallel to the said portion (48, 118) on the shaft.

6.   A fastening apparatus according to any of Claims 2 to 5 wherein the said portions (60, 128a, 48, 118) are parallel to the axis of the shaft.

7.   A fastening apparatus according to any one of the preceding claims wherein the groove side surface (54, 120) and the portion of the first interior surface of the second member are conical surfaces;  the deformable retainer means including an annular ring formed from a bendable material, the edge thickness of the annular ring being receivable in the deformable-retainer receiving space.

8. A fastening apparatus according to any one of the preceding claims wherein the deformable retainer means includes a band formed from a bendable material and having parallel interior and exterior surfaces.

9. A fastening apparatus according to Claim 8 wherein the predetermined portion of the shaft is a free end; the length of the band being generally equivalent to that of the retainer-receiving space when the second member is received over the shaft whereby the end of the band is generally flush with the free end of the shaft when the band is inserted within and fills the retainer-receiving space (Figure 15).

10. A fastening apparatus according to any one of the preceding claims wherein the shaft is a chain pin adapted to pivotally secure together the ends of various link parts of a chain; the second member is a collar surrounding a free end of the chain pin; the deformable retainer means being formed from a bendable material and adapted to follow the contour of and fill the receiving space between the pin and collar upon insertion therebetween to prevent removal of the collar from the pin without application of a predetermined force.

24.

11. A fastening apparatus according to Claim 10 wherein the deformable retainer is formed integrally and in one piece with the collar (Figure 11), the retainer being secured to the collar at a position on the interior peripheral surface thereof by a frangible connection adapted to be broken when the collar is inserted within the through aperture.

12. A fastening apparatus according to any one of Claims 1 to 10 wherein the shaft is a hub (32) for a bearing assembly; the second member is an inner race part (36, 38) including at least a portion of a bearing raceway; the deformable retainer means being formed from a bendable material and adapted to follow the contour of and fill the receiving space between the hub and inner race part upon insertion therebetween.

13. A fastening apparatus according to Claim 12 wherein deformable retaining means includes a ring formed by a flange on a bearing shield (46) adapted to cover the area intermediate the inner race part and an outer race part (26) spaced outwardly of the inner race part on one side of the bearing assembly.

14. A fastening apparatus according to Claim 13 including at least one additional shield (44, 48) on the one side of the assembly secured to and rotatable with at least one of the inner and outer race parts; the first shield located axially outside the additional shield.

15.   A fastening apparatus according to Claim 13 or 14 including a second external shield (88) on a second side of the assembly opposite the one side for covering the space between the inner and outer race parts on the second side of the assembly;  the hub including an end on the second side of the assembly and a second groove extending inwardly of the end, the groove having a side surface extending inwardly of the hub at an angle to the central axis;  a second inner race part having a second interior peripheral surface larger than the end;  at least a portion of the second interior peripheral surface being radially aligned with and opposed to the second groove and extending at an angle to and toward the central axis;  the second inner race part and hub together defining a second retainer receiving space therebetween including a space between the radially aligned, opposing second interior surface portion and second groove;  the second shield including a flange extending inwardly from a radially inner portion and forming a deformable retainer means received in the second retainer receiving space for retaining the second inner race part on the support and the shield on the assembly.

16.   A fastening apparatus according to any one of Claims 12 to 15 wherein the hub extends axially beyond said inner race part on the one side of the assembly and which includes a trolley bracket (15) including means for supporting the bearing assembly at one end of the bracket secured to the hub on the one side.

26.

17. A fastening apparatus according to any one of Claims 12 to 15 including a second inner race part on the hub and mating with the first of the inner race parts, the inner race parts together providing at least one inner raceway for the antifriction bearing means; the means on the trolley bracket for supporting the bearing assembly including interlocking means (23, 34) for preventing rotation of the hub, and thus the inner race parts, with respect to the trolley bracket.

18. A method for assembling a fastening assembly comprising: providing a shaft and a groove or recess therein adjacent a predetermined area of the shaft; placing a second member around and over the groove in the shaft, the second member having an interior surface larger than the shaft which defines a space between the shaft and second member; inserting a deformable retainer means into the space between the shaft and second member from adjacent the predetermined area and deforming the retainer inwardly toward the shaft into said groove or recess during such insertion with a portion of the interior surface of the second member which extends toward the shaft for retaining the second member on the shaft and preventing its withdrawal over the predetermined area of the shaft.

19. A method according to Claim 18 wherein the shaft has an axis; the insertion step including pushing the deformable retainer means parallel to the shaft axis until the retainer means reach the interior surface portion of the second member which bends the retainer means toward the shaft.

20. A method according to Claim 18 or 19 wherein the inserting step includes breaking a frangible connection which joins the deformable retainer means to the second member by striking the retainer means with a force sufficient to break the connection and driving the retainer means into the space between the shaft and the second member.

21. A method according to Claim 18, 19 or 20 together with the assembly of a chain wherein the shaft forms part of a chain pin including inserting the chain pin through aligned apertures in the ends of a plurality of chain links placed end-to-end such that the links engage an inwardly-facing surface of a head on one end of the pin prior to placing a collar forming the second member around the shaft and completing assembly of the collar to the chain pin with the deformable retainer means.

22. A method according to Claim 21 including locating the collar against an abutment surface on the pin to provide sufficient clearance for the links on the pins as the collar is placed around and over the groove in the shaft.

23. A method according to any one of Claims 18 to 22 including inserting the retainer means partially into the interior surface of the second member prior to placing the second member around and over the shaft to facilitate location of the second member properly on the shaft.

24. A wheel assembly for a conveyor system including outer race means for providing an outer raceway, inner race means for providing an inner raceway, bearing means between the inner and outer race means for rotatably supporting one race means with respect to the other, a support member having interengaging locking means extending between the support member and the inner race means, and a stud engaging the support member and the inner race means, the stud having a central axis coaxial with the central axis of the inner race means, characterised in that the interengaging locking means includes a projection (23) on at least one of the support member and the inner race means and a recess (34) on the other of the support member and inner race means, the recess corresponding in shape to and receiving the projection, the projection and recess being positioned eccentrically with respect to the common central axis of the stud and inner race means whereby rotation between the support member and inner race means is prevented.

25. A wheel assembly according to Claim 24 wherein the projection and recess are circular.

26. A wheel assembly according to Claim 24 or 25 including an I-beam support track (10) having a central flange (14) and a lower flange (11, 12) for supporting the wheel assembly, the projection extending into the recess a distance less than the distance between the innermost surface of the wheel assembly and the central flange of the track when the wheel assembly is in its normal position on the track whereby the wheel assembly can be removed from the support member and track without disassembling other parts of the conveyor system.

0022681

FIG. 1

FIG. 2

0022681

FIG. 3

FIG. 4

FIG. 5

FIG. 6

FIG. 7

0022681

FIG. 8

FIG. 9

FIG. 10

FIG. 11

FIG. 12

FIG. 13

FIG. 14

FIG. 15

## DOCUMENTS CONSIDERED TO BE RELEVANT

| Category | Citation of document with indication, where appropriate, of relevant passages | Relevant to claim |
|---|---|---|
| | FR - A1 - 2 270 473 (S.K.F. CIE D'APPLI- CATIONS MECANIQUES) <br> * fig. 7 * | 1,2 |
| | DD - A - 105 870 (SCHMIDT et al.) <br> * fig. 3 * | 1 |
| P | Patents Abstracts of Japan, Vol. 3, No. 154, 18 December 1979 <br> page 95M85 <br> & JP - A - 54 - 132042 | 1 |
| | FR - A - 2 118 612 (SKF INDUSTRIAL TRADING AND DEVELOPMENT CO.) <br> * fig. 5 * | 1 |
| | GB - A - 1 521 668 (CAM GEARS) <br> * fig. 2 * | 1 |
| | US - A - 1 921 978 (LEARY) <br> * fig. 3 * | 1 |
| | US - A - 3 282 315 (ZAHODIAKIN) <br> * fig. 5 * | 1 |
| | US - A - 3 909 086 (KELESHIAN) <br> * fig. 4 * | 1 |
| | DE - A1 - 2 836 729 (LIQUID CONTROLS) <br> * complete document * | 17. |

**CLASSIFICATION OF THE APPLICATION (Int. Cl.³)**

F 16 B 4/00

**TECHNICAL FIELDS SEARCHED (Int.Cl.³)**

B 21 L 9/00
B 65 G 17/00
E 21 F 13/02
F 16 B 4/00
F 16 C 35/00
F 16 C 43/00
F 16 G 13/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search <br> Berlin | Date of completion of the search <br> 17-10-1980 | Examiner <br> ZAPP |
|---|---|---|

EPO Form 1503.1 06.78